# EUROPEAN PATENT SPECIFICATION

(11) **EP 1 270 956 B1**
(45) Date of publication and mention of the grant of the patent: **01.06.2005**
(21) Application number: 02077187.9
(22) Date of filing: 03.06.2002
(51) Int. Cl.: F15B 11/042, F15B 13/04, F16K 1/54

(54) **Device for regulation of the oil flow rate in a hydraulic distributor**
Vorrichtung zur Durchflussteuerung in einem hydraulischen Verteiler
Dispositif de régulation du débit d'huile dans un distributeur hydraulique

(30) Priority: 22.06.2001 IT BO20010400
(43) Date of publication of application: 02.01.2003
(73) Proprietor: CNH Italia S.p.A., 41100 Modena (IT)
(72) Inventor: Nicolini, Luca, 41100 Modena (IT)
(74) Representative: Vandenbroucke, Alberic

(56) References cited:
- EP-A- 0 508 380
- FR-A- 1 281 266
- US-A- 3 643 684

## Description

The present invention relates to a device designed to regulate the oil flow rate in a hydraulic distributor.

Oil flow regulation devices in hydraulic distributors are well known in the art and typically comprise a main body with a threaded cavity; a shutter which can be screwed, at least partly, into the threaded cavity, and means for screwing and unscrewing the shutter in such a way as to reduce or increase the oil flow rate in the hydraulic distributor.

The shutter, installed in a pressurised oil feed pipe or line, allows the operator to reduce or increase the diameter of the said pipe so as to reduce or increase the quantity of oil that passes through the pipe in a given unit of time.

However, the regulation devices currently in use present the considerable drawback that the shutter is not affected in the same way by the pressurised oil in the screwing direction of the shutter when compared to the way in which it is affected in the unscrewing direction.

A metering device for a pneumatic circuit fitting is known from EP-A-0 508 380. This metering device comprises a rotary cap with a two-part regulating unit. The first part of this unit is fixedly connected to the rotary cap. Rotation of the cap and thus rotating the first part provides for rotating and axially sliding of the second part of the unit. Axially sliding of the second part will alter an opening between an inlet and an outlet orifice and thus also the amount of pressurised air going from one orifice to the other. Because of the presence of seals it is impossible for pressurised air to flow inside the metering device. Therefor, the metering device is not affected in the same way by the pressurised air into the direction that will enlarge the opening between the inlet and outlet orifice -unscrewing direction- when compared to the way in which it is affected into the opposite, screwing direction.
This phenomenon will be better understood by reference to a form of embodiment, which will be described in detail below.

It is therefore an object of the present invention to overcome the above described drawback by providing an oil flow regulating device in which the influence of the oil pressure on the shutter is independent of the actuation direction of the shutter.

According to the present invention, a device for regulating the oil flow rate in a hydraulic distributor is provided, said device comprising :
- a main body with a cavity which is at least partly threaded and extends along a longitudinal axis;
- a shutter comprising a first threaded portion screwed into said cavity and a separate, second portion; one axial end of said first threaded portion being subjected to the pressure of a hydraulic source and said first and second portions presenting an overlapping engagement part at the other axial end of said first portion allowing free sliding movement of said portions relative to each other along said axis; and
- actuating means operable connected to said second portion to move said first portion in two opposite directions inside said cavity along said axis so as to reduce or increase the oil flow rate in said hydraulic distributor.

The device is characterised in that said device further comprises a channel in fluid communication with said hydraulic source and said overlapping engagement part to subject said other axial end of said first portion to substantially the same hydraulic pressure for maintaining said first portion in a substantial hydraulic balance.

The present invention will now be described in further detail, by way of example, with reference to the accompanying drawings, in which :
Figure 1 shows an oil flow regulation device inserted in a hydraulic distributor, in accordance with the principles of the present invention;
Figure 2 shows the flow regulation device illustrated in figure 1 on a larger scale; and
Figure 3 shows a detail of the device illustrated in figure 2.

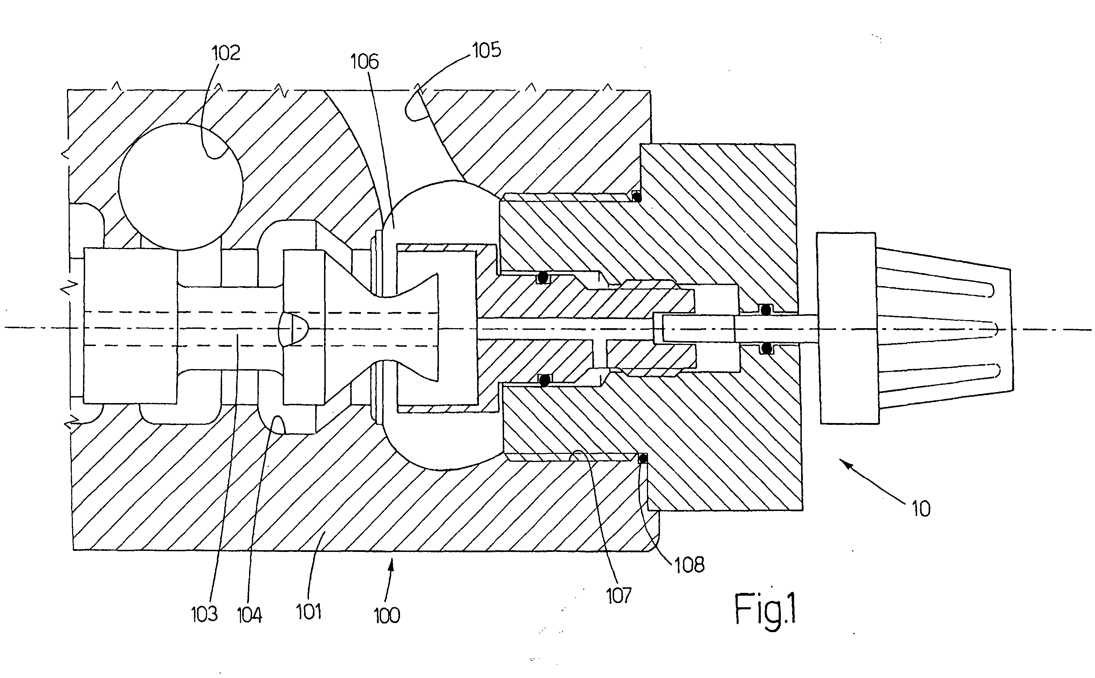

In Figure 1, number 10 indicates an oil flow regulation device installed in a hydraulic distributor 100, only part of which is illustrated. The hydraulic distributor 100 comprises a main structure 101 (shown in cross-section), inside which a pressurised oil feed pipe 102 and a spool 103 can be distinguished. The spool 103 is operable to close or open the oil supply from pipe 102 and is of a conventional design. It therefore is not deemed necessary to describe the spool in any further detail.

Spool 103 is housed in a bore 104 which is hydraulically connected to a pipe 105 which conveys oil to a valve (not illustrated) of the hydraulic distributor 100. Between pipe 105 and the regulation device 10 there is an aperture 106 the size of which, as will be seen, can be regulated by the operator's action on device 10.

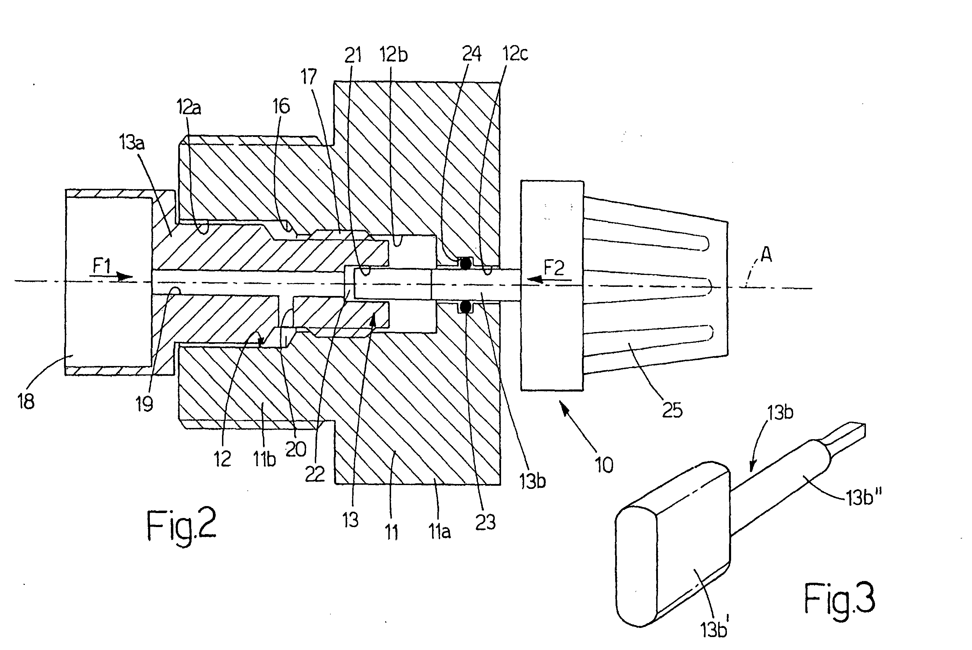

As shown in figure 2, device 10 comprises a main body 11 secured to the main structure 101 of distributor 100 by means of known systems, including hydraulic seal elements. In particular, the said main body 11 is substantially T-shaped, with a head 11a and a threaded stem 11b. The threaded stem 11b of main body 11 is screwed into a threaded seating 107 in main structure 101. An 0-ring 108 (figure 1) provides the hydraulic seal and prevents leakage of pressurised oil.

As shown in figure 2, main body 11 in turn contains a cavity 12 symmetrical with a longitudinal axis of symmetry A. The cavity can be theoretically divided into three chambers, 12a, 12b and 12c, positioned in series one after another. Cavity 12 is designed to receive a shutter 13 divided into a first portion 13a which is physically separate from a second portion 13b, portions 13a and 13b being coupled to one another by means to be explained in greater detail below.

As can be seen from figure 2, portion 13a is housed in the two chambers 12a and 12b. Between chamber 12a and chamber 12b there is a shoulder 16 which defines the travel of shutter 13 along axis A. The major part of chamber 12b closest to chamber 12a presents a thread 17 which co-operates with a threaded end of portion 13a, allowing the portion 13a to be screwed inside the main body 11.

Analysing portion 13a in more detail, it will be seen that it comprises a cup-shaped extremity 18 which is connected hydraulically to a channel 19 containing a deviation hole 20 that feeds oil to chamber 12a and chamber 12b in the area of shoulder 16. Inside chamber 12b, channel 19 leads into a slot 21 by means of which portion 13a is coupled to portion 13b.

As shown in figure 3, portion 13b of shutter 13 has a front part 13b' and a rear part 13b''. The prismatic front part of 13b' can be inserted into slot 21. As will be seen, part 13b' and slot 21 are shaped so as to leave a small gap 22 between them to allow pressurised oil to flow into chamber 12b. In other words, portion 13a and portion 13b are coupled "freely" to one another as a result of the prismatic shape of front part 13b' and the corresponding slot 21.

Rear part 13b'' has a circular section for most of its length. An 0-ring 23 is positioned in a seating 24 in chamber 12c to provide the hydraulic seal between the circular section of the rear part 13b'' and chamber 12c. Rear part 13b'' is coupled to a knob 25 in a known way, which is therefore not illustrated in detail in figure 2. The operator can increase or decrease the flow rate of pressurised oil into distributor 100 by rotating knob 25 around axis A in either direction.

The overlapping length of slot 21 and front part 13b' is chosen such that in the fully open position of the shutter 13 a small gap 22 remains, whereas, in the fully closed position of the shutter 13, there still is sufficient overlap for the front part 13b' to engage the slot 21. The free coupling between front part 13b' and the slot 21 thus allows free axial movement of both parts relative to each other along axis A.

The innovation introduced by the form of embodiment illustrated in the annexed figures consists substantially of the fact that shutter 13 is "split", one portion 13a being threaded and the other portion 13b being unthreaded.

Moreover, due to the cup-shaped extremity 18, channel 19 and slot 21 which are hydraulically connected to one another, portion 13a is in a substantial hydraulic balance, since hydraulic force F1 exerted on extremity 18 has the same absolute value as hydraulic force F2, which develops along portion 13a in correspondence with chamber 12b along axis A but in the opposite direction of force F1. As the vertical area of extremity 18, as seen perpendicular to axis A, and the vertical combined area of portion 13a which is situated in chambers 12b and 12a are comparable, and the hydraulic pressures at aperture 106 (and therefore at extremity 18) and gap 22 are practically equal, threaded portion 13a is substantially in a dynamic balance (force F1 is substantially equal to force F2). This would not be the case if, as in the case of the solutions adopted to date, the two portions 13a and 13b would be formed by a single, unitary component. In this case, it would be necessary to remove the area represented by the cross-section along axis A of part 13b' of portion 13b from the surface of portion 13a on which the pressure in chamber 12b is exerted, thus reducing the corresponding force F2.

This would result in an imbalance between forces F1 and F2. Consequently, at the unscrewing stage (when the flow rate is increased by moving portion 13a to the right with reference to Figure 1), the operator would be "assisted" in the operation by the excess force F1, whereas force F1 would present considerable opposition at the stage of narrowing aperture 106, ie. when the oil flow rate in pipe 105 is reduced by moving shutter 13 to the left, with reference to figure 1.

Under some working conditions, such as in combination with vibrations experienced by the distributor 100, this dynamic imbalance between F1 and F2 could lead to failure to maintain the flow rate conditions previously set by the operator.

## Claims

1. A device (10) for regulating the oil flow rate in a hydraulic distributor (100), said device (10) comprising:
- a main body (11) with a cavity (12) which is at least partly threaded and extends along a longitudinal axis (A) ;
- a shutter (13) comprising a first threaded portion (13a) screwed into said cavity (12) and a separate, second portion (13b); one axial end of said first threaded portion (13a) being subjected to the pressure of a hydraulic source and said first and second portions (13a,13b) presenting an overlapping engagement part at the other axial end of said first portion (13a) allowing free sliding movement of said portions (13a, 13b) relative to each other along said axis (A); and
- actuating means (25) operable connected to said second portion (13b) to move said first portion (13a) in two opposite directions inside said cavity (12) along said axis (A) so as to reduce or increase the oil flow rate in said hydraulic distributor (100); and
**characterised in that** said device (10) further comprises a channel (19) in fluid communication with said hydraulic source and said overlapping engagement part to subject said other axial end of said first portion (13a) to substantially the same hydraulic pressure for maintaining said first portion (13a) in a substantial hydraulic balance.

2. A device (10) according to claim 1, **characterised in that** said first threaded portion (13a) comprises an extremity (18) for restrictively controlling the oil flow rate through an oil supply channel (105) of the distributor (100).

3. A device (10) according to claim 2, **characterised in that** said cavity (12) comprises, in series, a first chamber (12a); a second threaded section chamber (12b) for engaging the threaded part of said first portion (13a), and a third chamber (12c) in which sealing means (23,24) for said second portion (13b) are housed.

4. A device (10) according to claim 3, **characterised in that** a first hydraulic force (F1) exerts on said extremity (18) the same absolute value as a second hydraulic force (F2); said second hydraulic force (F2) develops along said first portion (13a) in correspondence with a chamber (12b) along said axis (A) but in the opposite direction of said first hydraulic force (F1).

5. A device (10) according to any of the preceding claims, **characterised in that** said engagement part between said first and second portions (13a, 13b) is formed by a slot (21) on one side and prismatic means (13b') on the other; said prismatic means (13b') fitting inside said slot (21).

## Patentansprüche

1. Vorrichtung (10) zum Regeln der Ölströmungsrate in einem hydraulischen Verteiler (100), wobei die Vorrichtung (10) Folgendes umfasst:
- einen Hauptkörper (11) mit einem Hohlraum (12), der zumindest teilweise mit Gewinde versehen ist und sich entlang einer Längsachse (A) erstreckt;
- ein Verschlusselement (13), das einen ersten Gewindeabschnitt (13a), der in den Hohlraum (12) eingeschraubt ist, und einen getrennten zweiten Abschnitt (13b) umfasst; wobei ein axiales Ende des ersten Gewindeabschnittes (13a) dem Druck einer Hydraulikquelle ausgesetzt ist und die ersten und zweiten Abschnitte (13a, 13b) einen sich überlappenden Eingriffsteil an dem anderen axialen Ende des ersten Abschnittes (13a) bilden, der eine freie Verschiebungsbewegung der Abschnitte (13a, 13b) relativ zueinander entlang der Achse (A) ermöglicht; und
- eine Betätigungseinrichtung (25), die betriebsmäßig mit dem zweiten Abschnitt (13b) verbunden ist, um den ersten Abschnitt (13a) in zwei entgegengesetzten Richtungen innerhalb des Hohlraumes (12) entlang der Achse (A) zu bewegen, um auf diese Weise die Ölströmungsrate in dem hydraulischen Verteiler (100) zu verringern oder zu vergrößern; und
- **dadurch gekennzeichnet, dass** die Vorrichtung (10) weiterhin einen Kanal (19) in Strömungsmittelverbindung mit der Hydraulikquelle und dem überlappenden Eingriffsteil umfasst, um das andere axiale Ende des ersten Abschnittes (13a) im Wesentlichen dem gleichen Hydraulikdruck auszusetzen, um den ersten Abschnitt (13a) im Wesentlichen in hydraulischem Gleichgewicht zu halten.

2. Vorrichtung (10) nach Anspruch 1, **dadurch gekennzeichnet, dass** der erste Gewindeabschnitt (13a) ein Ende (18) zur eingeschnürten Steuerung der Ölströmungsrate durch einen Ölspeisekanal (105) des Verteilers (100) umfasst.

3. Vorrichtung (10) nach Anspruch 2, **dadurch gekennzeichnet, dass** der Hohlraum (12) in Serie eine erste Kammer (12a); eine zweite einen Gewindeabschnitt aufweisende Kammer (12b) für einen Eingriff mit dem Gewindeteil des ersten Abschnittes (13a) und eine dritte Kammer (12c) umfasst, in der Dichtungseinrichtungen (23, 24) für den zweiten Abschnitt (13b) untergebracht sind.

4. Vorrichtung (10) nach Anspruch 3, **dadurch gekennzeichnet, dass** eine erste hydraulische Kraft F1 auf das Ende (18) den gleichen Absolutwert wie eine zweite hydraulische Kraft F2 ausübt, wobei die zweite hydraulische Kraft F2 entlang des ersten Abschnittes (13a) in Entsprechung mit einer Kammer (12b) entlang der Achse (A), jedoch in der entgegengesetzten Richtung der ersten hydraulischen Kraft F1 entwickelt wird.

5. Vorrichtung (10) nach einem der vorhergehenden Ansprüche, **dadurch gekennzeichnet, dass** der Eingriffsteil zwischen den ersten und zweiten Abschnitten (13a, 13b) durch einen Schlitz (21) auf einer Seite und durch prismatische Einrichtungen (13b') auf der anderen Seite gebildet ist, wobei die prismatischen Einrichtungen (13b') in das Innere des Schlitzes (21) passen.

## Revendications

1. Dispositif (10) de régulation du débit d'huile dans un distributeur hydraulique (100), ledit dispositif (10) comprenant:
- un corps principal (11) pourvu d'une cavité (12) qui est au moins partiellement filetée et qui s'étend le long d'un axe longitudinal (A);
- un obturateur (13) comportant une première portion filetée (13a) vissée dans ladite cavité (12) et une seconde portion séparée (13b); une extrémité axiale de ladite première portion filetée (13a) étant soumise à la pression d'une source hydraulique, et lesdites première et seconde portions (13a, 13b) possédant une partie engagée en chevauchement au niveau de l'autre extrémité axiale de ladite première portion (13a), permettant auxdites portions (13a, 13b) de coulisser librement l'une par rapport à l'autre le long dudit axe (A);
et
- des moyens fonctionnels d'actionnement (25) raccordés à ladite seconde portion (13b) pour déplacer ladite première portion (13a) dans deux sens opposés à l'intérieur de ladite cavité (12) le long dudit axe (A), afin de réduire ou d'augmenter le débit d'huile dans ledit distributeur hydraulique (100);
et
**caractérisé en ce qu'**e ledit ispositif (10) comprend en outre un canal (19) en communication hydraulique avec ladite source hydraulique et ladite partie engagée en chevauchement pour soumettre ladite autre extrémité axiale de ladite première portion (13a) à substantiellement la même pression hydraulique afin de maintenir ladite première portion (13a) dans un équilibre hydraulique substantiel.

2. Dispositif (10) selon la revendication 1, **caractérisé en ce que** ladite première portion filetée (13a) comprend une extrémité (18) destinée à contrôler avec restriction le débit d'huile à travers un canal d'alimentation en huile (105) du distributeur (100).

3. Dispositif (10) selon la revendication 2, **caractérisé en ce que** ladite cavité (12) comprend, en série, une première chambre (12a); une seconde chambre à section filetée (12b) destinée à s'engager dans la partie filetée de ladite première portion (13a), et une troisième chambre (12c) dans laquelle sont logés les moyens d'étanchéité (23,24) pour ladite seconde portion (13b).

4. Dispositif (10) selon la revendication 3, **caractérisé en ce qu'**une première force hydraulique (F1) exerce sur ladite extrémité (18) la même valeur absolue qu'une seconde force hydraulique (F2); ladite seconde force hydraulique (F2) se développe le long de ladite première portion (13a) en correspondance avec une chambre (12b) le long dudit axe (A), mais dans la direction opposée à la première force hydraulique (F1).

5. Dispositif (10) selon l'une quelconque des revendications précédentes, **caractérisé en ce que** ladite partie engagée entre lesdites première et seconde portions (13a, 13b) est constituée d'un côté par une encoche (21) et de l'autre côté par un moyen prismatique (13b'), ledit moyen prismatique (13b') s'adaptant dans ladite encoche (21).
